# EUROPEAN PATENT SPECIFICATION

(11) **EP 2 705 729 B1**
(45) Date of publication and mention of the grant of the patent: **05.09.2018**
(21) Application number: 12719888.5
(22) Date of filing: 03.05.2012
(51) Int. Cl.: H05B 33/08, H05B 37/02, F21V 14/02, F21V 19/02

(54) **CONTROLLER AND SOLID STATE LIGHTING DEVICE FOR LARGE AREA APPLICATIONS**
STEUERUNG UND FESTKÖRPERBELEUCHTUNGSVORRICHTUNG FÜR GROSSFLÄCHIGE ANWENDUNGEN
UNITÉ DE COMMANDE ET DISPOSITIF D'ÉCLAIRAGE À SEMI-CONDUCTEUR POUR APPLICATIONS SUR ZONES ÉTENDUES

(30) Priority: 06.05.2011 US 201113102544
(43) Date of publication of application: 12.03.2014
(73) Proprietor: General Electric Company, Schenectady, NY 12345 (US)
(72) Inventor: AURONGZEB, Deeder, East Cleveland, OH 44112 (US); ROBERTS, Bruce, Richard, East Cleveland, OH 44112 (US); TRACY, David, Joseph, East Cleveland, OH 44112 (US)
(74) Representative: Foster, Christopher Michael
(86) International application number: PCT/US2012/036222
(87) International publication number: WO 2012/154477

(56) References cited:
- WO-A1-93/01575
- WO-A1-2011/015971
- DE-A1-102005 003 633

## Description

### BACKGROUND OF THE DISCLOSURE

Solid-state lighting devices are becoming more and more popular for large area lighting applications, both indoor and outdoor. These devices typically include an array of LEDs or organic LEDs (OLEDs). OLEDs in particular are amenable to physical actuation due to their plastic/polymer substrate and flexibility, such as bending, twisting, etc., and manipulation of flexibility can be used for a variety of functions for adjusting intensity, gamut, color and other mood lighting application. For instance, OLED arrays can be bent inward for light focusing/diffusion/mixing, or may be bent outward for light spreading and color separation. In addition, arrays consisting of multiple colored LED sections can be physically manipulated to perform color adjustment or mixing. Advances in lighting control using such solid-state device arrays have thus far been limited by the cost and complexity of providing corresponding control devices, whereby a need remains for improved control systems and drivers for solid-state lighting device arrays for use in large area lighting applications and elsewhere. WO93/01575A1 discloses a communications system for driving a lamp and a fan. Pulse code modulation of the AC power is performed to deliver messages from the wall switch to the fan controller. The fan controller decodes the message to drive the brightness of the lamp to speed of the fan. DE10 2005 003 633 A1 discloses a flexible mounting board for LEDs whereby the flexible board can be convexly or concavely bend to adjust the light beam.

### SUMMARY OF THE DISCLOSURE

The present disclosure provides control circuits and solid-state lighting devices in which powerline phase cutting is used to transmit control messages between a control circuit and a flexible and shape adjustable solid-state lighting device. The control messaging can be used to facilitate remote color mixing, light focusing, light spreading, and/or light direction control, alone or in conjunction with dimming and/or color mixing, and can include separate individual addressing for multiple adjustable lighting devices connected to a single control circuit.

A control circuit is provided in accordance with one or more aspects of the disclosure, including a switching circuit coupled between an AC input terminal and an output terminal which is operable in a first state to couple the input and output terminals, and to decouple the terminals in a second state. The control circuit includes a processor coupled with the switching circuit as well as with a user interface and/or an external device such as an ambient light sensor, occupancy sensor, etc. The processor of the controller receives an input signal or value from the user interface or external device and constructs a message that includes data symbols indicating a physical adjustment command or value based in whole or in part on the input signal or value. The processor provides a control signal to set the state of the switching circuit to transmit the message to a flexible and shape adjustable solid-state lighting device coupled with the output terminal. The processor transmits a first data symbol of the message by providing the switching control signal to selectively place the switching circuit in the first state to allow current flow between the AC input terminal and the output terminal, and transmits a second data symbol by providing the switching control signal to selectively place the switching circuit in the second state to interrupt current flow between the input and output terminals for a predetermined time period.

In certain embodiments, the message is binary, having multiple bits indicating the physical adjustment command or value, and in other embodiments trinary or other message types can be used. In some embodiments, moreover, the message includes one or more data symbols indicating a dimming adjustment command or value for the solid-state lighting device. Alternatively or in combination, the message may include one or more data symbols that indicate a color adjustment command or value. The message in some embodiments, moreover, may include at least one data symbol indicating an address.

A flexible and shape adjustable solid-state lighting device is provided in accordance with further aspects of the disclosure, which includes an AC input and a flexible and shape adjustable solid-state lighting device array comprising a plurality of solid-state lighting devices, such as LEDs, OLEDs, etc. The device includes a driver which operates according to a control signal to convert input power from the AC input to power the lighting device array, as well as an actuator operative according to a physical adjustment input to set or adjust one or more physical conditions of the array, such as bend angle, twist amount, rotational direction, linear translation position, etc. The lighting device also includes a processor which receives a message including a plurality of data symbols indicating one or more physical adjustment commands or values. The processor provides the physical adjustment input to cause the actuator to set or adjust the physical condition(s) of the lighting device based at least in part on the message.

In certain embodiments, the message is binary, including a plurality of bits indicating the physical adjustment command or value. The lighting device in some embodiments includes a pulse detect circuit coupled with the AC input, which provides a pulse signal to the processor having a duration representing the amount of phase cutting in the received AC input power, and the processor determines the data symbols of the message according to the duration of the pulse signal. In some embodiments, the processor determines the duration of the pulse signal and compares the pulse duration to one or more thresholds to identify data symbols of the message. In certain embodiments, the message includes at least one data symbol indicating one or more dimming adjustment commands or values and the processor provides the driver control signal to cause the driver to set or adjusted an amount of power provided to the flexible and shape adjustable solid-state lighting device array based in whole or in part on the dimming adjustment command or value. In certain embodiments, moreover the message includes one or more color adjustment commands or values and the processor provides one or both of the physical adjustment input and the driver control signal to cause the driver and/or the actuator to set or adjust the color of light provided by the solid-state lighting device array.

### BRIEF DESCRIPTION OF THE DRAWINGS

One or more exemplary embodiments are set forth in the following detailed description and the drawings, in which:
Fig. 1 is a system diagram illustrating an exemplary large area lighting system with a plurality of flexible and shape adjustable lighting devices operated by a single controller in which the controller selectively phase cuts AC power supplied to the lighting devices to send control messages including physical adjustment commands or values in accordance with one or more aspects of the present disclosure;
Fig. 2 is a schematic diagram illustrating further details of an exemplary user interface in the controller of Fig. 1;
Fig. 3 is a schematic diagram illustrating further details of an exemplary flexible and shape adjustable solid-state lighting device with a pulse detection circuit for discriminating between data symbols of a message sent by phase cutting input AC power in accordance with further aspects of the disclosure;
Fig. 4 illustrates exemplary graphs including waveform diagrams showing phase cut and non-phase cut AC waveforms and corresponding pulse detection circuit output signals for binary "1" and "0" data symbols in the embodiment of Fig. 1; and
Figs. 5 and 6 are perspective and partial side elevation views illustrating an exemplary flexible and shape adjustable OLED lighting device according to the disclosure.

### DETAILED DESCRIPTION OF THE PREFERRED EMBODIMENTS

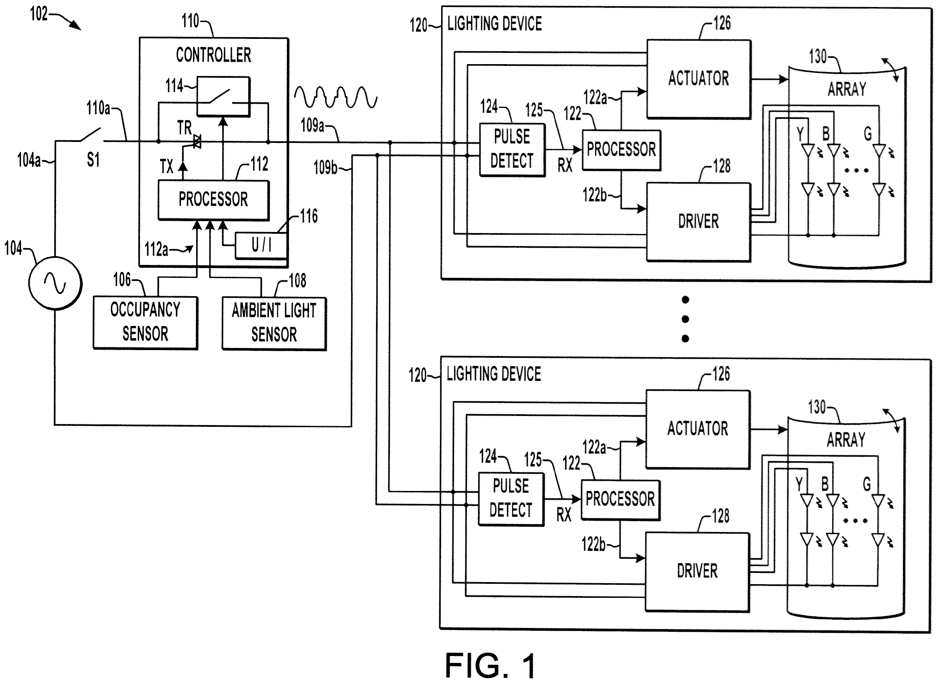

Referring now to the drawings, like reference numerals are used to refer to like elements throughout and the various features are not necessarily drawn to scale. Fig. 1 illustrates an exemplary large area lighting system 102 with an AC power source 104 providing power via the controller 110 to a plurality of flexible and shape adjustable lighting devices 120. The AC source 104 in the illustrated embodiment is a single phase source, but multiphase power systems can be used. The source 104 has a first output line 104a connected through a switch S1 to an AC power input terminal 110a of the controller 110. The controller 110 has an output terminal 109a couple to each lighting device 120, with a return line 109b connecting the lighting devices 120 back to the source 104. The system 102 may optionally include one or more external devices coupled with the controller by wired or wireless connections, including without limitation an occupancy sensor 106 and an ambient light sensor 108.

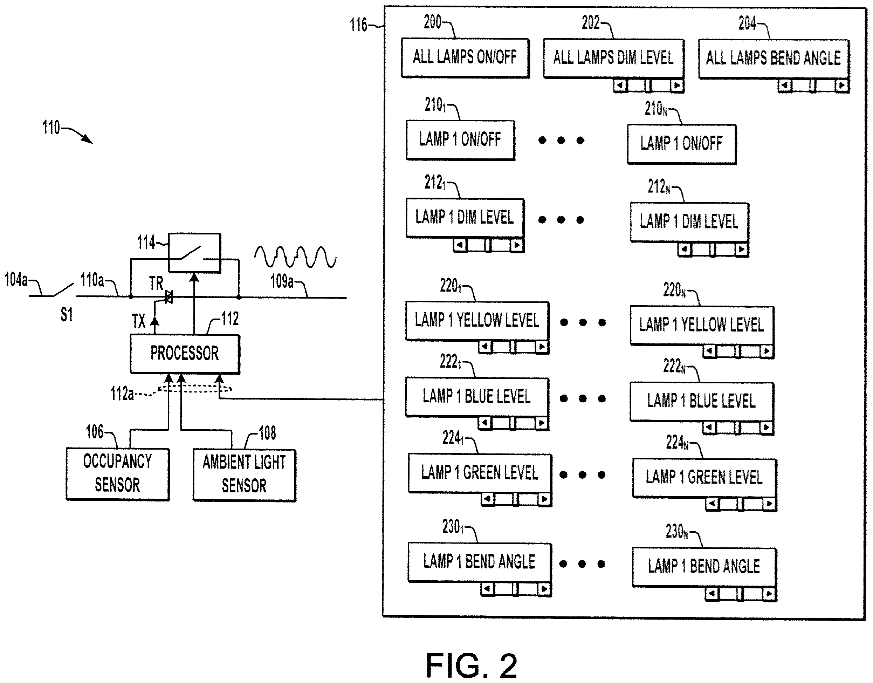

As best seen in Figs. 1 and 2, the controller 110 is used to control one or more operational aspects of the lighting devices 120, in particular, physical actuation of a movable solid-state lighting device array 130. This physical manipulation may be performed using the controller 110 alone and/or in combination with on/off control and dimming level control. These remote control capabilities may be used for a variety of purposes, including without limitation setting or adjusting the direction of light output by one or more of the devices 120, setting or adjusting the light output level (e.g., dimming) of one or more of the devices 120, setting or adjusting the color content of one or more of the devices 120 (e.g., color mixing), etc.

The control circuit 110 includes a switching circuit coupled between the AC input terminal 110a and the output terminal 109a that selectively electrically connects the terminals 110a, 109a in a first switching state or electrically decouples the terminals in a second switching state according to a switching control signal TX. The switching circuit can be any form of electrical switch or switches. In the illustrated embodiment, the switching circuit includes a triac TR connected between the AC input terminal 110a and the output terminal 109a. In some embodiments, a bypass component 114 is provided in parallel with the triac TR for reducing the on-state impedance of the path between the terminals 110a and 109a. For example, the bypass component 114 may be a relay with contacts connected between the terminals 110a and 109a and having a control coil operable according to a control signal. As seen in the figures, the exemplary control circuit 110 includes a processor 112 operatively coupled with the switching circuit to provide a triac control signal TX to the triac TR and also to provide a control signal to the coil of the bypass relay 114.

As best seen in Fig. 2, the controller 110 also includes a user interface 116 providing an input 112a to the processor 112. The processor 112, moreover, may receive further inputs 112a from one or more external devices, such as the exemplary occupancy sensor 106 and/or the ambient light sensor 108. The user interface 116 provides an input 112a to the processor 112 based on one or more user-entered commands relating to control of the lighting device(s) 120. In particular, the exemplary user interface 116 allows a user to turn all lamps 120 on or off via a control 200, and further allows the user to set a global dimming level for all lamps via a control 202. A global bend angle control 204 is also provided in the illustrated interface 116 to allow the user to set a bend angle value for all the lighting devices 120. In addition, the user interface 116 provides controls 210 to individually turn on or off one of an integer number N lighting devices 120 operably coupled with the controller 110 via the power lines 109a and 109b, where N is greater than one. The interface 116 further provides a corresponding integer number N individualized dimming controls 212 allowing the user to set individual dimming levels for the connected lighting devices 120.

The controller 110 also allows color mixing, with individualized controls 220 for controlling the individual yellow levels, 222 for controlling the individual blue levels, and 224 for controlling the individual green levels of the devices 120. In this regard, as seen in Fig. 1, the solid-state lighting device arrays 130 may include individual LEDs or OLED panels (or groups thereof) corresponding to a plurality of different colors, for example, yellow, blue and green in the illustrated embodiment. Moreover, the lighting device 120 may provide separate control over power levels to which the LEDs or OLED panels of a given color are driven. The controls 220, 222, and 224 of the illustrated user interface 116 (Fig. 2) allow the user to set the dimming level for each lamp 120 on a color-by-color basis. This, in turn, allows adjustment of the lighting color provided by the devices 120 by selectively adjusting the amounts of different constituent colors by the individual dimming controls 220, 222 and/or 224 of the interface 116. Color mixing may alternatively or in combination be accomplished through physical actuation of the lighting devices 120 in order to mix the light outputs of different colored portions of the array 130 for a given individual device 120 or groups thereof.

The illustrated user interface 116 also provides an integer number N lamp and angle controls 230 by which the user can set or adjust a bend angle of the corresponding flexible and shape adjustable lighting device 120. The interface 116, moreover, can be equipped to allow user entry of one or more further physical adjustment settings for individual lighting devices 120 or groups thereof. For example, such controls may provide adjustable settings for twist angles or other physical condition of all or some of the flexible and shape adjustable solid-state lighting device arrays 130. In this regard, the interface 116 may be any form of user interface by which a user can enter one or more values and/or commands. For instance, the user may set a specific dimming level by entering a specific numeric value (e.g., a percentage from 0 to 100) using a numeric keypad, or by adjusting a slide control as shown in the example of Fig. 2. Such controls can be provided via a touchscreen, graphical user interface, switches, knobs, buttons, voice activation, wireless control, or any other suitable means, whether alone or in combination. The user may also actuate one or more commands, such as increasing or decreasing the dimming level in predefined increments, increasing or decreasing bend angle in predefined increments, etc.

The external devices 106 and 108 may provide signals and/or values as inputs 112a to the processor 112 of the controller 110. For instance, these devices can tell the controller 110 to turn off one or more lighting devices 120 at sunrise and to turn the devices 120 on at sunset (e.g., according to a sensed ambient light signal from the sensor 108). Also, the controller 110 may be notified of the presence of an occupant in a room or predefined area, and may turn one or more lighting devices 120 on in response to an occupancy signal from the sensor 106.

The control circuit 110 is operated according to these user-entered commands and/or values, with the processor 112 receiving one or more input signals and/or values 112a from the user interface 116 and/or from the external devices 106, 108. The processor 112 constructs a message (not shown) based at least partially on the received input or inputs 112a. The message includes a plurality of data symbols which together indicate a physical adjustment command and/or value for one or more of the flexible and shape adjustable solid-state lighting devices 120. In some embodiments, the data symbols are binary (e.g., having one of two distinct values "0" or "1"). In other embodiments each data symbol may identify one of more than two possible values (e.g., trinary, etc.).

The processor 112 provides the triac control signal TX as well as the coil control signal for the relay 114 to switch the switching circuit TR, 114 in one of two states. In the first state, the processor 112 provides the switching control signals to turn the triac TR on and to also turn on the relay 114 such that current can flow between the AC input terminal 110a and the output terminal 109a. In the second state, the processor 112 provides the control signals to render the relay contact open (nonconductive) and to turn off the triac TR for at least a portion of a corresponding AC input power cycle or half-cycle. In some embodiments, moreover, the relay 114 can be selectively turned on (for low impedance operation) when the processor 112 is not transmitting any messages, and the relay 114 can be turned off (nonconductive or open) while the processor switches only the triac TR for selective phase-cutting to transmit message data symbols. The controller 110, in this regard, may include various analog and/or digital circuitry for synchronizing the control of the triac TR and/or of the relay 114 with specific portions of an input AC power cycle (e.g., zero-crossings).

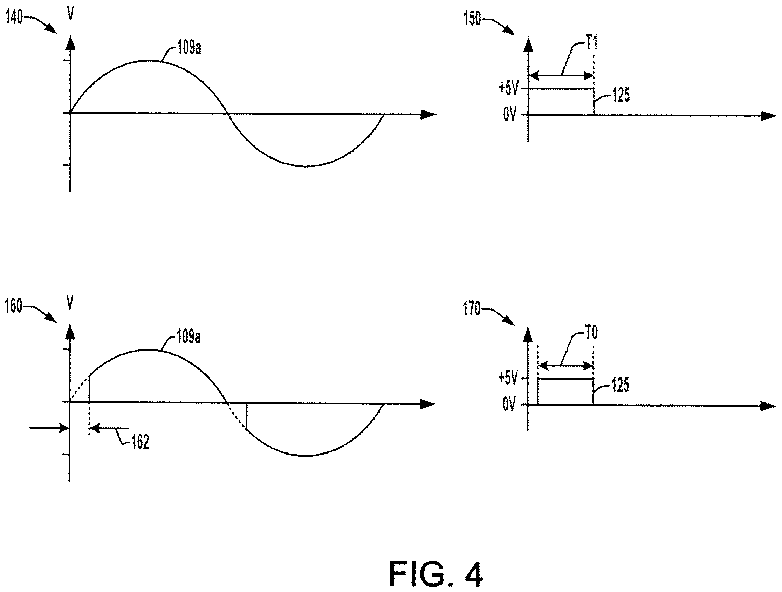

Referring also to Fig. 4, the processor 112 provides the switching control signals to the switching circuit to selectively transmit the constructed message to the lighting devices 120 that are coupled with the output terminal 109a. In particular, the processor 112 transmits a first data symbol (e.g., binary "1" in one example) by providing the switching control signals to selectively place the switching circuit in the first state to allow current flow between the AC input terminal 110a and the output terminal 109a, and transmits a second data symbol (e.g., binary "0") by providing the switching control signals to selectively place the switching circuit in the second state to interrupt current flow between the AC input terminal 110a and the output terminal 109a for a predetermined time period 162. Various embodiments are possible in which one or more data symbols are provided in each AC input cycle, or in which a data symbol is provided over the course of two or more AC input cycles. For embodiments utilizing triac phase-cutting, selective delay in firing the triac TR from one or both zero-crossings of an input AC cycle can be used. In this example, the graph 140 in Fig. 4 illustrates an uninterrupted AC input cycle at the terminal 109a corresponding in one example to a binary "1", and the graph 160 illustrates a phase-cut AC cycle in which current flow through the controller is interrupted for the predetermined time period 162 in a leading portion of an AC cycle (beginning with a zero-crossing) corresponding to a binary "0". This phase-cutting can be done in one portion of an entire AC cycle, or in corresponding portions of both AC half-cycles as shown in the figure.

The illustrated controller configuration 110 thus utilizes phase-cutting to indicate one binary data symbol and the lack of phase-cutting to indicate the other binary data symbol. In other embodiments, the message can be encoded using two different amounts of phase-cutting to represent different data symbols of a binary message. Moreover, other embodiments can utilize three or more different amounts of phase-cutting (including zero phase-cutting) to represent three or more unique data symbols in a trinary or other non-binary implementation.

The selective phase-cutting is thus used by the controller 110 to provide the message via the power line connections 109 to one or more flexible and shape adjustable lighting devices 120 as shown in Fig. 1. In this manner, the control circuit 110 can instruct the lighting devices 122 turn on or off, to dim the devices 120 individually or in groups, and/or to bend or otherwise physically manipulate or adjust the lighting devices 120 individually or in groups. In this regard, the processor 112 in certain embodiments constructs the message to further include at least one data symbol indicating one or more dimming adjustment commands or values for one or more of the solid-state lighting devices 120. In certain embodiments, moreover, the message includes at least one data symbol indicating a color adjustment command or value for one, some, or all of the lighting devices 120. Furthermore, the message in some embodiments may include an address data symbol or symbols by which a given message can be directed to a specific one of the connected lighting devices 120.

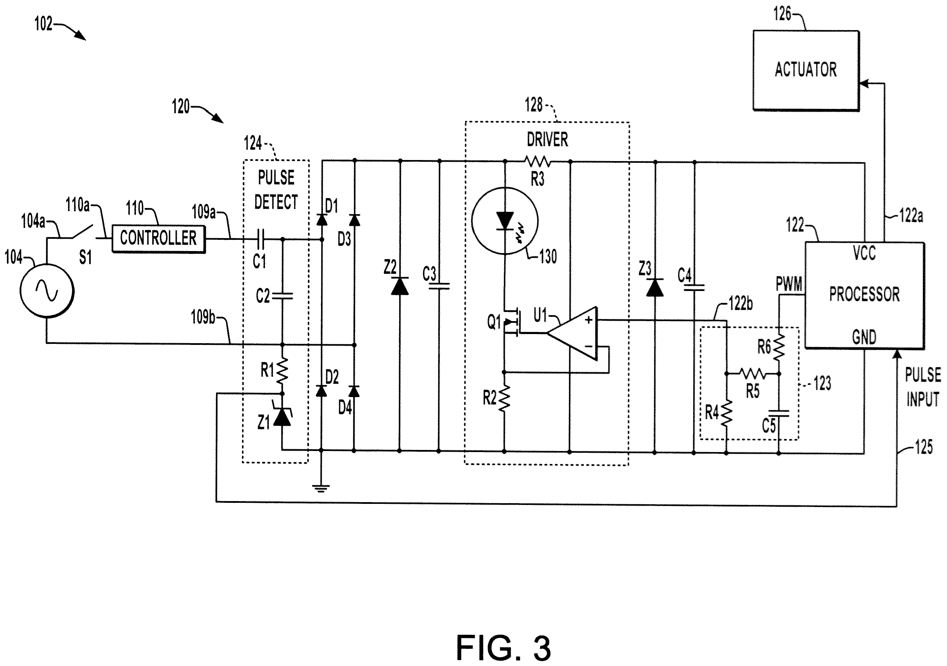

Referring also to Figs. 3-6, Fig. 3 illustrates further details of an exemplary flexible and shape adjustable lighting device 120 in the above-described system 102. The illustrated device 120 includes an AC input for receiving input power via the lines 109, as well as a flexible and shape adjustable solid-state lighting device array 130 that includes a plurality of solid-state lighting devices. In some embodiments, the array 130 includes one or more LEDs. In certain embodiments, the array 130 includes a plurality of separate organic LED (OLED) sections, which may be connected with one another in any suitable configuration of series and/or parallel connections. Moreover, as discussed above, the lighting elements (LEDs and/or OLEDs) may be of two or more distinct colors, which may be separately connected for different driving levels.

The device 120 further includes one or more driver circuits 128, which may be any suitable form of circuitry by which electrical drive current can be selectively provided to one or all of the lighting elements of the array 130. For instance, in the example shown schematically in Fig. 1 above, the driver 128 may include three separate outputs (or three different driver circuits 128 may be provided within the device 120) for separately controlling different portions of the array 130, such as three different colored portions for yellow, blue, and green in one example.

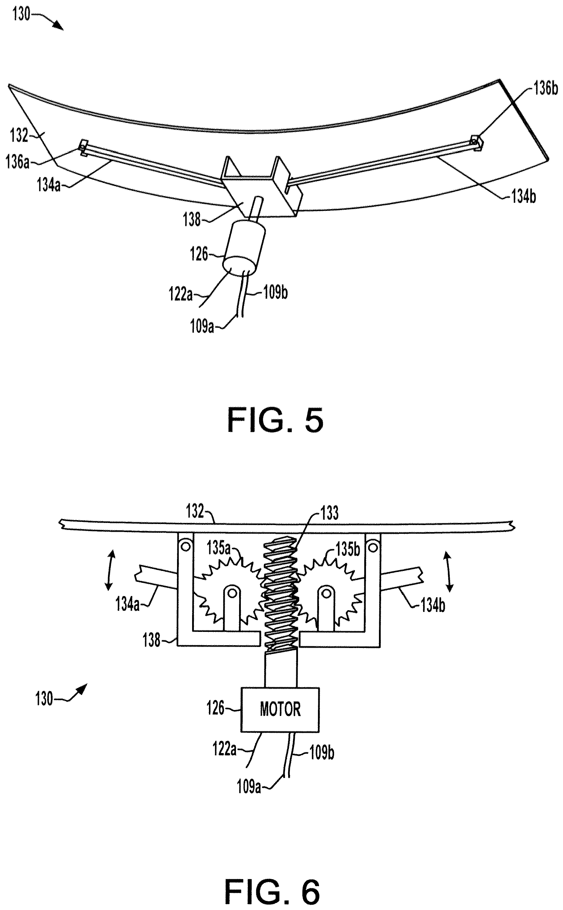

In addition, the device 120 includes a physical actuator 126, which can be any suitable mechanical, electromechanical, magnetic, or other form of actuator that is operable according to a control signal or value 122a to set and/or adjust one or more physical conditions of the array 130 (e.g., bend angle, output light direction, twist amount, etc.). The physical actuator 126 can be any suitable form of apparatus by which one or more physical conditions of the solid-state array 130 can be changed or adjusted or otherwise set, including without limitation rotational motors, gears, levers, linear motors, micro-electromechanical (M EMS) devices, magnetic and/or electromagnetic systems, etc., where Figs. 5 and 6 illustrate one illustrative example using a motor 126 controlled by the processor 122.

Both the driver 128 and the physical actuator 126 receive AC input power via the power line connections 109. In the illustrated embodiment, the input voltage is reduced by way of a capacitive divider circuit formed by capacitors C1 and C2, and the reduced AC voltage is provided to a full bridge rectifier circuit including diodes D1-D4. In one embodiment, C1 is 1.47 µF, C2 is 47 nF, and the diodes are 1N4004 type devices. A 30 volt Zener diode Z2 and a third capacitor C3 (330 µF) are connected in parallel with one another across upper and lower DC bus terminals at the output of the rectifier bridge D1-D4, and the driver circuit 128 provides an output connection for the array 130 at the upper DC bus line. The array return connection is coupled in a series branch including a power switching transistor Q1 (FET BSS138 in one example) and a sense resistor R2 (e.g., 1 ohm) which is connected to the lower DC bus line.

The transistor Q1 includes a gate terminal controlled by an output of an op amp U1 (e.g., LT1800) with an inverting input connected to the upper terminal of the sense resistor R2, and a non-inverting input receiving a control signal 122b generated by a lighting device processor 122. The op amp U1 is connected to a secondary (e.g., 5 volt) DC circuit separated from the initial 30 volt DC bus by a resistor R3 (5.1 K in one example), which includes a 5.1 volt Zener diode Z3 and a capacitor C4 (330 µF), where the 5 volt supply is also used to power the processor 122. In one example, the processor 122 is a microcontroller such as a PIC12F683.

The processor 122 provides a pulse width modulated (PWM) signal to a low pass filter circuit 123 which includes an RC filter R6 (10K) and C5 (22 µF), followed by a resistive divider circuit set by a resistor R5 (90 K) and a resistor R4 (1K), where the node joining R4 and R5 is provided as the control signal 122b to the non-inverting input of the op amp U1. In this manner, the processor 122 controls the duty cycle of the PWM signal provided to the filter circuit 123, and the op amp U1 operates in closed loop fashion to regulate the current through the sense resistor R2 (and hence the current through the OLED array 130) in accordance with the filtered setpoint signal 122b. Thus, the processor 122 can perform on/off control, as well as dimming control. As mentioned above, the driver circuit 128 may include one or more outputs that are individually controllable, in which case the processor 122 can provide separate setpoint signals to the driver 128 for this individualized current control. Thus, the driver 128 operates according to the driver control signal 122b from the processor 122 to selectively provide power to the solid-state lighting device array 130.

The processor 122 also provides a physical adjustment input signal 122a to the actuator 126 to set or adjust one or more physical conditions of the flexible and shape adjustable solid-state lighting device array 130.

The processor 122 also receives a pulse input signal 125 from a pulse detection circuit 124. In the illustrated example, the pulse detection circuit 124 includes the capacitive divider formed by capacitors C1 and C2, as well as a resistor R1 (100 K) with a first terminal connected to the AC return line 109b and a second terminal connected to a cathode of a 5.1 volt Zener diode Z1 whose anode is connected to the lower DC bus terminal. The node joining R1 and C1 provides the pulse input signal 125 as an input to the processor 122. As seen in graphs 150 and 170 of Fig. 4, the pulse input signal 125 is generally a 5 volt pulse having a duration that varies in accordance with the amount of phase-cutting in the input AC line 109a. In particular, the graph 150 shows the case where no phase-cutting is done, in which case the pulse signal 125 has a duration T1 corresponding to a binary "1" data symbol. Graph 170 shows a second case in which the leading portions of each AC input half cycle are interrupted for a predetermined time 162, in which case the width T0 of the pulse 125 is less than T1 and corresponds to a second binary data symbol "0".

The processor 122 thus receives the pulse input signal 125 which has a duration that changes with the amount of phase cutting on the power line. In this example, time T1 indicates a binary 1, and a time T0 (which is less than T1) represents a binary 0. The processor 122 determines whether the duration of the pulse is above or below a threshold value to discriminate between the nominal times T1 and T0. In this manner, processor 112 interprets the communications signals received via the pulse signal 125 by comparing the pulse widths to a threshold, and receives messages through this binary communication configuration to perform one or more functions, including changing the output level of the OLED array 130 by adjusting the PWM-controlled output 122b provided to the op amp circuit U1, including setting dimming levels and/or turning the array 130 on/off. In addition, the processor 112 may provide a control output 122a to one or more actuators 126 for selective bending of the OLED array 130 or segments thereof. In other embodiments in which more than 2 data symbol values are possible (e.g., trinary), the processor 122 can compare the duration of a given pulse signal 125 to multiple thresholds to discriminate between the possible data symbols.

The controller 110 performs the phase-cutting according to a messaging protocol (in the lighting devices 120 interpret the received messages according to the same protocol), which can be any protocol by which one or more commands and/or values can be sent from the controller 110 to the lighting device processor 112 (e.g., dim down, dim up, dim to a specified level, on/off, move the actuator, etc.), where such commands can be directed to an entire OLED or LED array 130, or specific portions thereof (e.g., for different control over different colored portions of the array). This can be coded into any given number of bits or other forms of data symbols (e.g., trinary, etc.) to construct a message, and the message may include addressing capabilities such that a single phase cut dimming controller 110 can address (provide commands/values) to two or more driver/physical actuator circuits individually and/or in predesignated groups. In one example, eight 9 to form a message bits could be used in order to encode up to 256 dimming values and/or bending angles. In one example, a single bit is provided in every AC input cycle. In another possible example, phase cutting is used on both the positive and negative portions of the AC input cycle, to thereby transmit to bits per AC input cycle.

In practice it may be advantageous to cut/interrupt only a small portion of the AC input cycle (or half-cycle) in order to provide maximum available power to the driver/actuator of the devices 120, where it is also preferable to provide enough phase-cutting to allow the different data symbols to be distinguishable by the devices 120. Also, one practical restriction on the amount of data per message is the perceived response time of the circuit, where data transfer that takes more than about 300 ms may delay response by the driver/actuator of the device(s) 120 to the point where a user will perceive a response delay.

In one addressable embodiment, an initial 8-bit message includes an address of the intended recipient device 120, and the following 8-bit message includes a command. In one embodiment, the controller 110 could be a single wall dimmer 110 that provides phase cut power to multiple lighting devices 120, each having their own unique address. In some implementations, multiple powered devices 120 may be assigned the same address (or no addressing capability is provided), in which case each device 120 can detect the phase-cutting and thereby receive a command signal from a single wall mount phase-cut dimmer controller 110, and these multiple lighting devices 120 can be dimmed/turned on or off/bent in unison. The processor 112 of the lighting device 120 in some embodiments can provide a control output to one or more actuators 126, and/or a actuator 126 can be used which directly receives and interprets control signals from the powerline provided thereto.

Referring also to Figs. 5 and 6, an exemplary flexible and shape adjustable LED or OLED array 130 of the lighting device 120 is shown, including three portions of different colored LEDs or OLEDs for color mixing. Moreover, the array 130 is formed as a bendable panel 130 onto which the LEDs and/or OLEDs are mounted or formed. The exemplary array 130 in Figs. 5 and 6 includes an elongated panel 132 formed of a thin material that is rigid with regard to its own weight and its rated load, but which can be conformed with an external force applied thereto. The panel preferably carries one or more solid state light emitting devices such as flexible OLED panels. Multiple, flexible OLED panel portions are schematically shown in Fig. 1 above, each of which including OLED devices with a first electrode and a second electrode which can be connected and powered in series, for example where there are three or less panels, or can be connected and powered individually, or in series/parallel mode for panels comprised of four or greater OLED portions. In order to have a flexible operation and provide a radius of curvature on the order of about five inches (5 in), an aspect ratio is from 1.0 to 1.8 with a thickness of less than five hundred micrometers (500µm). The total illuminating panel comprised of the three OLED panel portions may be on the order of approximately eighteen inches (18") in length and approximately four inches (4") in width in certain embodiments. Due to its flexible operation, the thickness may be less than one millimeter (1mm) per one square meter (1m²) in order to reduce the potential for cracking in the device 130. Further, to reduce visible differentiation, the device can be covered with a diffuser material such as a fifty percent (50%) alumina, twenty percent (20%) titanium dioxide (TiO₂) and thirty percent (30%) (LaMg)₃(PO4)₂ material, or a titanium dioxide/alumina particle.

On a surface of the panel 132 opposite that of the light emitting devices is provided a conforming mechanism which imparts smoothly contoured, generally continuous shape, arc, or curvature to the panel portion, or alternatively no conforming mechanism is provided, in which case the array can be physically manipulated so as to impart a sharp crease, angle, or fold to the panel portion, either or both of which are referred to herein as "bending", wherein a motorized actuation system including a motor 126 can set and/or adjust a bending angle of the array 130. The conforming mechanism in this embodiment imparts curving actuation over the length of the panel, for example, via first and second arms 134a, 134b extending from a central actuator 138. A rotary motor 126 drives a threaded shaft screw or worm gear 133 according to the physical adjustment input signal or value 122a received from the processor 122 to move gears 135a and 135b (Fig. 6) to thereby move the arms 134 extending from the gears 135. The outer or distal ends of each arm 134a, 134b are pivotally mounted to the panel 132 via pins 136a and 136b, while the proximal or inner ends of the arms 134 include a spur gear 135 that engages with the worm gear 133. Selective rotation of the worm gear 133 imparts rotary motion to the spur gears 135 which are thereby moved toward and away from the rotational axis of the central worm gear 133 in response to the actuation or rotation. The direction of rotation of the worm gear 133 via motor actuator 126 extends or retracts the first and second arms 134 to impart a curvature to the elongated panel 132.

The above examples are merely illustrative of several possible embodiments of various aspects of the present disclosure, wherein equivalent alterations and/or modifications will occur to others skilled in the art upon reading and understanding this specification and the annexed drawings. In particular regard to the various functions performed by the above described components (assemblies, devices, systems, circuits, and the like), the terms (including a reference to a "means") used to describe such components are intended to correspond, unless otherwise indicated, to any component, such as hardware, processor-executed software, or combinations thereof, which performs the specified function of the described component (i.e., that is functionally equivalent), even though not structurally equivalent to the disclosed structure which performs the function in the illustrated implementations of the disclosure. Although a particular feature of the disclosure may have been illustrated and/or described with respect to only one of several implementations, such feature may be combined with one or more other features of the other implementations as may be desired and advantageous for any given or particular application. Furthermore, references to singular components or items are intended, unless otherwise specified, to encompass two or more such components or items. Also, to the extent that the terms "including", "includes", "having", "has", "with", or variants thereof are used in the detailed description and/or in the claims, such terms are intended to be inclusive in a manner similar to the term "comprising". The invention has been described with reference to the preferred embodiments. Obviously, modifications and alterations will occur to others upon reading and understanding the preceding detailed description. It is intended that the invention be construed as including all such modifications and alterations.

## Claims

1. A flexible and shape adjustable solid state lighting device (120), comprising:
an AC input for receiving input power;
a flexible and shape adjustable solid state lighting device array (130) comprising a plurality of solid state lighting devices (120);
a driver (128) operative according to a driver control signal to convert input power from the AC input to provide power to the flexible and shape adjustable solid state lighting device array (130); **characterised by** comprising: a physical actuator (126) operative according to a physical adjustment input to set or adjust at least one physical condition of the flexible and shape adjustable solid state lighting device array (130); and
a processor (123) operative to receive a message including a plurality of data symbols indicating at least one of a physical adjustment command and a physical adjustment value, and to provide the physical adjustment input to cause the physical actuator to set or adjust the at least one physical condition of the flexible and shape adjustable solid state lighting device array (130) based at least partially on the message.

2. The flexible and shape adjustable solid state lighting device of claim 1, where the message is a binary message including a plurality of bits indicating the physical adjustment command or physical adjustment value.

3. The flexible and shape adjustable solid state lighting device of claim 2, comprising a pulse detect circuit (124) coupled with the AC input and operative to provide a pulse signal to the processor (122), the pulse signal having a pulse duration indicative of an amount of phase cutting in the input power received at the AC input, where the processor (122) is operative to determine the plurality of data signals of the message according to the duration of the pulse signal.

4. The flexible and shape adjustable solid state lighting device of claim 2, where the processor (122) is operative to determine the pulse duration of the pulse signal and to compare the pulse duration to at least one threshold to identify data symbols of the message.

5. The flexible and shape adjustable solid state lighting device of any one of claims 1 to 4, where the message includes at least one data symbol indicating at least one dimming adjustment command or dimming adjustment value, and where the processor (122) is operative to provide the driver control signal to cause the driver (128) to set or adjust an amount of power provided to the flexible and shape adjustable solid state lighting device array (130) based at least partially on the at least one dimming adjustment command or dimming adjustment value.

6. The flexible and shape adjustable solid state lighting device of any one of claims 1 to 5, where the message includes at least one color adjustment command or color adjustment value, and where the processor (122) is operative to provide one or both of the physical adjustment input and the driver control signal to cause one or both of the driver (128) and the actuator (126) to set or adjust a color of light provided by the flexible and shape adjustable solid state lighting device array (130).

7. The flexible and shape adjustable solid state lighting device of claim 1, where the message includes at least one data symbol indicating an address, and where the processor (122) is operative to selectively ignore the message or act upon the message based on the address.

## Patentansprüche

1. Eine Flexible und in der Form anpassbare Festkörperbeleuchtungsvorrichtung (120), umfassend:
einen AC-Eingang zur Aufnahme von Eingangsstrom;
eine flexible und in der Form anpassbare Festkörperbeleuchtungsvorrichtungsanordnung (130), umfassend eine Mehrzahl von Festkörperbeleuchtungsvorrichtungen (120);
einen Treiber (128), wirkend entsprechend einem Treibersteuersignal zum Umwandeln von Eingangsstrom vom AC-Eingang, um Strom für die flexible und in der Form anpassbare Festkörperbeleuchtungsvorrichtungsanordnung (130) bereitzustellen;
**dadurch gekennzeichnet, dass** umfasst sind:
ein physischer Aktor (126), wirkend entsprechend einer physischen Anpassungseingabe, um mindestens einen physikalischen Zustand der flexiblen und in der Form anpassbaren Festkörperbeleuchtungsvorrichtungsanordnung (130) vorzugeben oder anzupassen; und
ein Prozessor (123), wirkend zum Empfangen einer Meldung, aufweisend eine Mehrzahl von Datensymbolen, die einen physischen Anpassungsbefehl und/oder einen physischen Anpassungswert angeben, und zum Bereitstellen der physischen Anpassungseingabe, um den physischen Aktor zu veranlassen, den mindestens einen physikalischen Zustand der flexiblen und in der Form anpassbaren Festkörperbeleuchtungsvorrichtungsanordnung (130) basierend zumindest teilweise auf der Meldung vorzugeben oder anzupassen.

2. Die Flexible und in der Form anpassbare Festkörperbeleuchtungsvorrichtung nach Anspruch 1, wobei die Meldung eine binäre Meldung ist, aufweisend eine Mehrzahl von Bits, die den physischen Anpassungsbefehl oder den physischen Anpassungswert angeben.

3. Die Flexible und in der Form anpassbare Festkörperbeleuchtungsvorrichtung nach Anspruch 2, umfassend eine Pulserkennungsschaltung (124), gekoppelt mit dem AC-Eingang und wirkend zum Bereitstellen eines Pulssignals zum Prozessor (122), wobei das Pulssignal eine Pulsdauer aufweist, die einen Umfang eines Phasenschnitts in dem vom AC-Eingang aufgenommenen Eingangsstrom angibt, wobei der Prozessor (122) arbeitet, um die Mehrzahl von Datensignalen der Meldung entsprechend der Dauer des Pulssignals zu bestimmen.

4. Die Flexible und in der Form anpassbare Festkörperbeleuchtungsvorrichtung nach Anspruch 2, wobei der Prozessor (122) wirkt, um die Pulsdauer des Pulssignals zu bestimmen und die Pulsdauer mit mindestens einem Schwellenwert zu vergleichen, um Datensymbole der Meldung zu identifizieren.

5. Die Flexible und in der Form anpassbare Festkörperbeleuchtungsvorrichtung nach einem der Ansprüche 1 bis 4, wobei die Meldung mindestens ein Datensymbol aufweist, das mindestens einen Dimm-Anpassungsbefehl oder Dimm-Anpassungswert angibt, und wobei der Prozessor (122) wirkt, um das Treibersteuersignal bereitzustellen, um den Treiber (128) zu veranlassen, eine zu der flexiblen und in der Form anpassbaren Festkörperbeleuchtungsvorrichtungsanordnung (130) bereitgestellte Strommenge basierend zumindest teilweise auf dem mindestens einen Dimm-Anpassungsbefehl oder Dimm-Anpassungswert vorzugeben oder anzupassen.

6. Die Flexible und in der Form anpassbare Festkörperbeleuchtungsvorrichtung nach einem der Ansprüche 1 bis 5, wobei die Meldung mindestens einen Farb-Anpassungsbefehl oder Farb-Anpassungswert aufweist und wobei der Prozessor (122) wirkt, um die physische Anpassungseingabe und/oder das Treibersteuersignal bereitzustellen, um den Treiber (128) und/oder den Aktor (126) zu veranlassen, eine durch die flexible und in der Form anpassbare Festkörperbeleuchtungsvorrichtungsanordnung (130) bereitgestellte Lichtfarbe vorzugeben oder anzupassen.

7. Die Flexible und in der Form anpassbare Festkörperbeleuchtungsvorrichtung nach Anspruch 1, wobei die Meldung mindestens ein Datensymbol aufweist, das eine Adresse angibt, und wobei der Prozessor (122) wirkt, um die Meldung selektiv zu ignorieren oder basierend auf der Adresse auf die Meldung einzuwirken.

## Revendications

1. Dispositif d'éclairage à semi-conducteurs souple et à forme réglable (120), comprenant :
une entrée à courant alternatif pour recevoir l'alimentation d'entrée ;
un réseau de dispositifs d'éclairage à semi-conducteurs souples et à forme réglable (130) comprenant une pluralité de dispositifs d'éclairage à semi-conducteurs (120) ;
un pilote (128) fonctionnant selon un signal de commande de pilote pour convertir l'alimentation d'entrée de l'entrée à courant alternatif pour fournir l'alimentation à la matrice de dispositifs d'éclairage à semi-conducteurs souples et à forme réglable (130) ;
**caractérisé en ce qu'**il comprend : un actionneur physique (126) fonctionnant selon une entrée de réglage physique pour définir ou régler au moins une condition physique de la matrice de dispositifs d'éclairages à semi-conducteurs souples et à forme réglable (130) ; et
un processeur (123) fonctionnant pour recevoir un message comprenant une pluralité de symboles de données indiquant au moins soit une commande de réglage physique, soit une valeur de réglage physique, et pour fournir l'entrée de réglage physique pour amener l'actionneur physique à définir ou régler l'au moins une condition physique de la matrice (130) des dispositifs d'éclairage à semi-conducteurs souples et à forme réglable, basée au moins en partie sur le message.

2. Dispositif d'éclairage à semi-conducteurs souple et à forme réglable selon la revendication 1, où le message est un message binaire comprenant une pluralité de bits indiquant la commande de réglage physique ou la valeur de réglage physique.

3. Dispositif d'éclairage à semi-conducteurs souple et à forme réglable selon la revendication 2, comprenant un circuit de détection d'impulsions (124) couplé à l'entrée à courant alternatif et ayant pour fonction de fournir un signal d'impulsion au processeur (122), le signal d'impulsion ayant une durée d'impulsion indicatrice d'une quantité de coupure de phase dans l'alimentation d'entrée reçue sur l'entrée à courant alternatif, le processeur (122) ayant la fonction de déterminer la pluralité de signaux de données du message en fonction de la durée du signal d'impulsion.

4. Dispositif d'éclairage à semi-conducteurs souple et à forme réglable selon la revendication 2, dans lequel le processeur (122) a la fonction de déterminer la durée de l'impulsion du signal d'impulsion et de comparer la durée de l'impulsion à au moins un seuil pour identifier les symboles de données du message.

5. Dispositif d'éclairage à semi-conducteurs souple et à forme réglable selon l'une quelconque des revendications 1 à 4, dans lequel le message comprend au moins un symbole de données indiquant au moins une commande de réglage de variation ou une valeur de réglage de variation et dans lequel le processeur (122) a la fonction de fournir le signal de commande du pilote pour amener le conducteur (128) à définir ou régler une quantité de puissance fournie à la matrice (130) de dispositif d'éclairage à semi-conducteurs souple et à forme réglable sur la base d'au moins une commande de réglage de variation de luminosité ou une valeur de réglage de variation de luminosité.

6. Dispositif d'éclairage à semi-conducteurs souple et à forme réglable selon l'une quelconque des revendications 1 à 5, dans lequel le message comprend au moins une commande de réglage de couleur ou une valeur de réglage de couleur, et où le processeur (122) a la fonction de fournir une entrée de réglage physique et/ou le signal de commande du pilote pour amener le conducteur (128) et/ou l'actionneur (126) à définir ou régler une couleur de la lumière fournie par le réseau de dispositifs d'éclairage à semi-conducteurs souples et à forme réglable (130).

7. Dispositif d'éclairage à semi-conducteurs souple et à forme réglable selon la revendication 1, dans lequel le message comprend au moins un symbole de données indiquant une adresse, et dans lequel le processeur (122) a pour fonction, de manière sélective, d'ignorer le message ou d'agir sur le message en fonction de l'adresse.
